# FASCICULE DE BREVET EUROPEEN

(11) **EP 0 608 650 B1**
(45) Date de publication et mention de la délivrance du brevet: **03.04.1996**
(21) Numéro de dépôt: 93403202.0
(22) Date de dépôt: 28.12.1993
(51) Int. Cl.: B60G 21/055, F15B 20/00, B60G 17/04

(54) **Dispositif de commande de sécurité pour vérin hydraulique asservi**
Sicherheitssteuereinrichtung für einen hydraulischen Arbeitszylinder
Safety control device for a hydraulic actuator

(30) Priorité: 29.01.1993 FR 9300974
(43) Date de publication de la demande: 03.08.1994
(73) Titulaire: AUTOMOBILES PEUGEOT, F-75116 Paris (FR); AUTOMOBILES CITROEN, F-92200 Neuilly sur Seine (FR)
(72) Inventeur: Camus, Gérard, F-95240 Cormeilles en Parisis (FR); Quin, Philippe, F-91530 Sermaise (FR)
(74) Mandataire: Durand, Yves Armand Louis

(56) Documents cités:
- EP-A- 0 024 284
- EP-A- 0 354 113
- EP-A- 0 354 438
- FR-A- 2 670 716
- GB-A- 927 745
- US-A- 3 272 062
- US-A- 4 828 283
- US-A- 4 936 196

## Description

La présente invention se rapporte à un dispositif de sécurité permettant d'asservir un vérin monté sur un circuit hydraulique.

De nos jours, il est fréquent de relier un vérin hydraulique à un circuit d'alimentation en fluide sous pression sur lequel est monté un distributeur de contrôle du vérin, luimême piloté par des moyens de commande, de façon à asservir le vérin, c'est-à-dire à ajuster en permanence sa longueur en fonction d'efforts qui sont appliqués. De tels vérins sont par exemple montés entre une barre anti-roulis et chaque élément de suspension d'un train de véhicule automobile, afin de corriger dynamiquement ou stabiliser le roulis de ce véhicule.

Cependant, en cas de panne des moyens de commande du distributeur, le vérin n'est plus contrôlé. Alors, sous l'effet des sollicitations qui lui sont appliquées, le vérin s'immobilise finalement dans l'une de ses positions extrêmes rentrée ou sortie. Une telle panne peut avoir des conséquences indésirables. Ainsi, dans le cas de la suspension active expliquée plus haut, l'immobilisation d'un vérin asservi rend le véhicule inconfortable et surprenant à conduire.

Aussi, on a proposé dans l'art antérieur des dispositifs de sécurité pour vérin hydraulique asservi. Ces dispositifs de sécurité détectent tout dysfonctionnement ou défaillance des moyens de commande du distributeur, et interrompent alors l'alimentation en fluide hydraulique du vérin.

Toutefois, avec les dispositifs connus, en cas de panne, le vérin est libéré et perd toutes ses capacités de contrôle dynamique des sollicitations qui lui sont appliquées. On comprend que cette solution est souvent inacceptable, comme notamment dans l'exemple de la suspension active décrite précédemment, où en cas de dysfonctionnement des moyens de commande, un tel dispositif a pour effet de rendre la conduite du véhicule difficile, voire dangereuse.

On connaît également d'après le document FR-A-2 670 716, un dispositif de sécurité monté sur un vérin hydraulique d'anti-roulis actif, du type conforme au préambule de la revendication 1.

La présente invention a donc pour but de proposer un dispositif de sécurité pour un vérin hydraulique asservi, qui pallie entre autres les inconvénients énoncés ci-dessus de l'art antérieur.

A cet effet, l'invention a pour objet un dispositif de sécurité pour un vérin asservi du type commandé par un distributeur principal, lui-même monté sur un circuit hydraulique et piloté par des moyens de commande, comprenant des moyens de dérivation aptes à couper, en cas de défaillance ou dysfonctionnement des moyens de commande, l'alimentation en fluide hydraulique par le distributeur principal, et des moyens pour, dans ledit cas, renvoyer le piston du vérin à une position intermédiaire prédéterminée, caractérisé en ce que les moyens pour renvoyer le piston du vérin à une position intermédiaire prédéterminée comprennent un deuxième distributeur monté en parallèle avec le distributeur principal dans le circuit hydraulique, et dont le tiroir est raccordé à la tige du piston du vérin par une liaison mécanique interrompue lors du fonctionnement normal des moyens de commande, de sorte que, en ledit cas de défaillance ou dysfonctionnement, un déplacement de la tige éloignant le piston d'une position intermédiaire prédéterminée provoque le déplacement dudit tiroir dans une position correspondant à un état du deuxième distributeur tel que le piston est alors déplacé en sens opposé, vers ladite position intermédiaire par la pression du fluide hydraulique.

Suivant une autre caractéristique, le dispositif comporte des moyens de désactivation aptes à interrompre la liaison mécanique précitée, lors du fonctionnement normal des moyens de commande du distributeur principal.

Avantageusement, la liaison mécanique précitée est constituée par un levier pivotant dont une branche peut être mise en contact avec un palpeur raccordé à la tige du vérin, et l'autre avec le tiroir du deuxième distributeur. La liaison peut également comporter au moins une butée contre laquelle l'une des branches du levier peut venir en appui, et donc apte à limiter un pivotement correspondant de ce levier.

Suivant une autre caractéristique du dispositif, le palpeur précité est monté à coulissement sur la tige du vérin, et sollicité élastiquement vers le levier pivotant, par exemple à l'aide d'un ressort interposé entre le palpeur et la tige du vérin.

Suivant encore une autre caractéristique, une partie du tiroir précité coulisse à l'intérieur du noyau d'un électro-aimant et comprend un embout apte à rendre le tiroir solidaire du noyau de l'électro-aimant, lorsque ce dernier est excité. Cet embout et l'électro-aimant constituent alors les moyens d'interruption ou de désactivation de la liaison mécanique précitée. Dans ce cas, l'électro-aimant pourra également comporter des moyens de rappel du noyau, aptes à solliciter ce dernier vers le levier pivotant.

Similairement, le noyau peut comprendre des moyens de rappel du tiroir dans une position où il est en contact avec une extrémité du levier.

Par ailleurs, le tiroir du deuxième distributeur est de préférence agencé pour qu'en position intermédiaire du piston, et donc du levier pivotant, le raccordement par le deuxième distributeur d'une source de fluide sous pression et de la chambre à grande section du vérin est interrompu, tandis que ladite chambre est reliée à la source de fluide hydraulique lorsque le piston est déplacé suivant un sens donné, et à l'échappement du circuit hydraulique précité, suivant le sens opposé de déplacement du piston.

Mais d'autres avantages et caractéristiques de l'invention ressortiront mieux de la description détaillée d'un mode de réalisation, donné uniquement à titre d'exemple, qui suit et se réfère aux dessins annexés, dans lesquels:
La figure 1 est une vue schématique d'un circuit hydraulique avec un vérin asservi, équipé d'un dispositif de commande de sécurité conforme à l'invention.
La figure 2 est une vue en coupe d'un vérin asservi et d'un mode de réalisation du dispositif de sécurité conforme à l'invention.
La figure 3 est une vue partielle agrandie du dispositif de la figure 2.
Les figures 4 à 7 sont vues schématiques similaires à la figure 3, et représentant respectivement le dispositif en position de maintien, d'asservissement par échappement, d'asservissement par alimentation et en position désactivée.

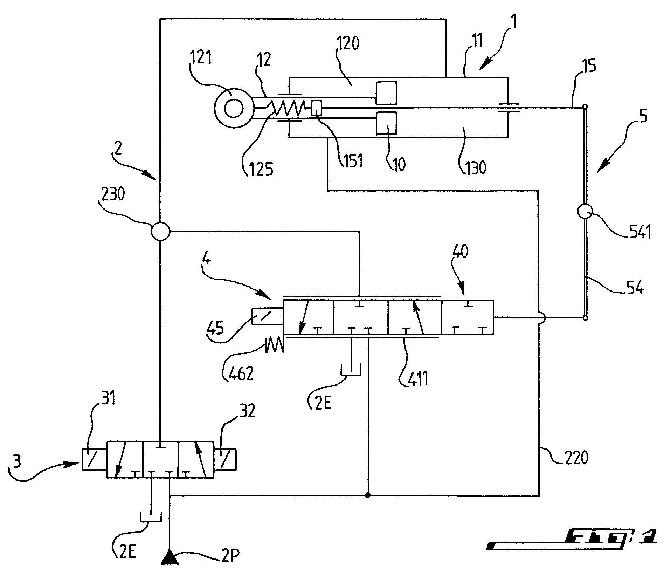

En se reportant à la figure 1, on voit un vérin hydraulique 1 et son circuit d'alimentation en fluide 2. Un piston 10 est monté à coulissement à l'intérieur du corps 11 du vérin 1, de manière à y définir deux chambres à volume variable 120 et 130. Une tige 12 solidaire du piston 10 s'étend suivant une direction X-X' de coulissement de ce dernier dans le corps 11. La tige 12 traverse la chambre 120 du vérin dite "de petite section", et fait saillie d'une extrémité de ce dernier. Pour sa part, la chambre 130 du vérin est dite "de grande section".

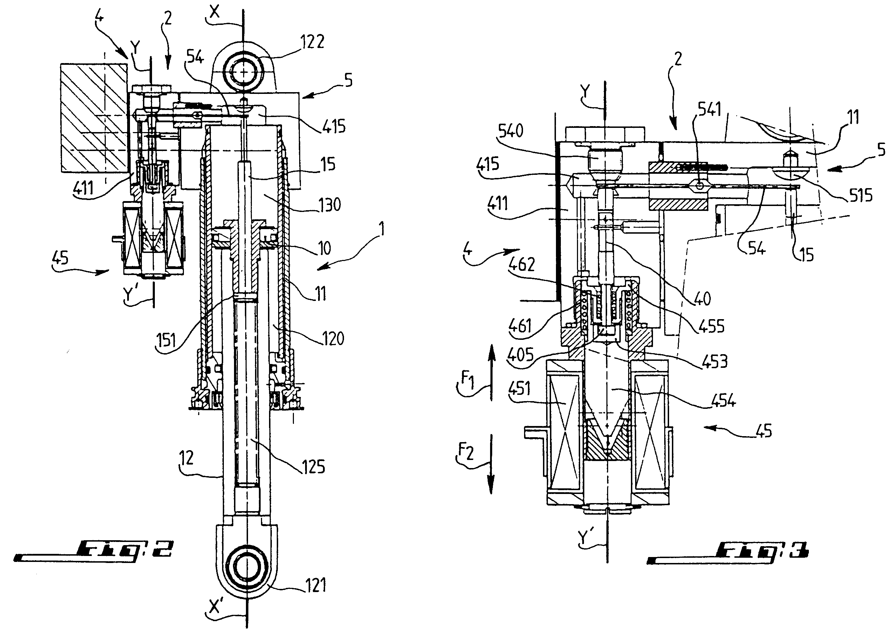

L'extrémité libre de la tige 12 en saillie du corps 11 comporte un organe 121 d'ancrage du vérin 1. Sur la figure 2, le corps 11 comprend un autre organe d'ancrage 122, à l'extrémité du vérin 1 opposée à l'organe 121. C'est à l'aide de ces organes 121 et 122 que des sollicitations de compression et de traction suivant X-X' sont appliquées au vérin 1.

Bien que ceci ne soit pas visible, le circuit 2 contient un fluide hydraulique approprié, tel qu'un liquide conventionnel. Comme illustré, le circuit 2 est raccordé aux chambres 120 et 130 du vérin 1. Ce circuit comporte une source d'alimentation fluide sous haute pression 2P, ainsi qu'un échappement 2E, tel que par exemple une bâche. On voit sur la figure 1 que la chambre de petite section 120 est reliée en permanence à la source de fluide 2P, par un conduit 220 du circuit 2.

Un distributeur hydraulique 3 de commande est aussi représenté sur la figure 1. Ce distributeur 3 dit "principal" est monté sur le circuit 2, et comporte deux entrées et une sortie unique. L'une des entrées du distributeur 3 est raccordée à l'échappement 2E du circuit 2, et l'autre à la source de fluide 2P. La sortie unique est reliée, par l'intermédiaire d'un raccord ou d'une jonction hydraulique 230 du circuit 2, à la chambre de grande section 130 du vérin 1.

On remarque également que le distributeur 3 comporte un tiroir coulissant à trois positions, lui-même piloté par des moyens de commande 31 et 32. Ces moyens 31 et 32 permettent de faire coulisser le tiroir du distributeur 3, et ainsi de modifier son état. Suivant l'un des états du distributeur principal, la source de fluide 2P est raccordée à la chambre 130 afin d'augmenter le volume de celle-ci, et donc de provoquer l'allongement du vérin 1. Une autre position de ce tiroir place le distributeur 3 dans un état suivant lequel la chambre 130 est reliée à l'échappement 2E du circuit. Alors, le piston 10 peut se déplacer dans le corps 11 de manière à réduire la longueur du vérin 1. On peut dire que le vérin 1 est asservi par le distributeur principal 3.

On comprend que l'asservissement du vérin 1 consiste à faire varier la pression dans la chambre 130 pour que la distance entre les organes d'ancrage 121 et 122 soit sensiblement égale à une valeur déterminée en permanence par un circuit de commande (non représenté) approprié et en fonction duquel les moyens de commande 31 et 32 sont actionnés. Un tel circuit de commande est le plus souvent électrique ou électronique, et peut être équipé par exemple de capteurs, d'ordinateurs ou encore de commandes directes, actionnables par un opérateur.

Conformément à l'invention, un dispositif de sécurité faisant office de commande auxiliaire est prévu pour l'asservissement du vérin 1. Ce dispositif comprend un deuxième distributeur 4 avec un tiroir 40 raccordé à la tige 12 du vérin par une liaison mécanique 5.

Grâce à cette liaison 5, lorsque le piston 10 est déplacé sous l'effet d'une sollicitation et s'éloigne d'une position intermédiaire prédéterminée, cet éloignement provoque, par l'intermédiaire de la tige 12 et de la liaison 5, un déplacement du tiroir 40 dans une position correspondant à un état du deuxième distributeur 4 tel que le piston 10 est alors déplacé en sens opposé ou renvoyé à nouveau vers sa position intermédiaire. Autrement dit, le deuxième distributeur 4, qui est piloté mécaniquement, fait varier la pression dans la chambre 130 du vérin afin que celui-ci reprenne, après avoir été sollicité, une longueur intermédiaire acceptable du point de vue de son utilisation, et à peu près constante.

Sur la figure 1, le distributeur principal 3, et le deuxième distributeur 4 sont tous les deux montés sur le même circuit hydraulique 2. Plus précisément, les distributeurs 3 et 4 sont montés en parallèle. De fait, le distributeur 4 comporte lui aussi une sortie unique reliée au raccord 230, et donc à la chambre 130, ainsi que deux entrées respectivement reliées à la source 2P et à l'échappement 2E du circuit 2. Néanmoins, on peut aussi imaginer que le distributeur principal et le distributeur auxiliaire soient chacun reliés à un circuit d'alimentation séparé.

Bien que ceci ne soit pas illustré, il peut être avantageux dans certains cas de prévoir dans le dispositif de sécurité des moyens de dérivation aptes à couper l'alimentation en fluide sous haute pression du vérin 1 par le distributeur 3 en cas de défaillance ou dysfonctionnement des moyens de commande 31, 32.

Or, le distributeur 3 de la figure 1 est agencé de façon que dans l'une des ses trois positions, la source 2P et l'échappement 2E, ainsi que le conduit du circuit 2 reliant la sortie du distributeur 3 et le raccord 230, soient hydrauliquement isolés. Cet état dit "fermé" du distributeur 3 correspond à la position centrale de son tiroir. Alors, les moyens de dérivation ont pour effet de placer le distributeur 3 en état fermé dès que ces moyens de commande 31 et 32 subissent une défaillance. Le distributeur 3 sera alors du type dit "normalement fermé". Par exemple, un tel effet peut être obtenu en reliant le tiroir du distributeur 3 à deux ressorts opposés d'équilibrage. On remarque sur la figure 1 que les moyens 31 et 32 sont constitués par des électro-aimants. De préférence, ces électro-aimants 31 et 32 seront commandés de manière à éviter qu'ils ne soient excités simultanément.

En se reportant aux figures 2 à 7, on voit que le distributeur 4, qui est du type à quatre positions dont deux correspondant à un état fermé, comprend un boîtier 411 fixé sur le corps 11 du vérin 1. Le tiroir 40, qui est formé d'une série de "pavés" cylindriques, est monté à coulissement dans ce boîtier avec son axe longitudinal Y-Y' de déplacement sensiblement parallèle à X-X'. Les pavés du tiroir 40 sont agencés de façon à pouvoir obturer ou dégager au moins un conduit débouchant dans l'alésage du boîtier 411 où le tiroir 40 coulisse, et reliant le distributeur 4 au circuit 2. Suivant l'exemple illustré, trois conduits sont formés dans le boîtier 411 et raccordent respectivement l'alésage du tiroir 40 à la source 2P, à l'échappement 2E et au raccord hydraulique 230.

Par ailleurs, on remarque que la liaison mécanique 5 est notamment constituée par un levier pivotant 54 monté à l'intérieur d'un évidement 415 défini conjointement par le boîtier 411 et par le corps du vérin 1. On notera également ici que suivant l'exemple illustré sur les figures 2 à 7, l'évidement 415 constitue une partie du circuit hydraulique 2 reliée à la chambre de grande section 130 de ce vérin.

Il ressort des figures 1 à 3 que le levier 54 est articulé sur un axe de pivotement 541, solidaire du corps 11 et à peu près perpendiculaire à un plan défini par les axes X-X' et Y-Y'. De part et d'autre de l'axe 541, l'extrémité libre du tiroir 40 ainsi que d'un palpeur 15 relié à la tige 12, font saillie dans l'évidement 415. L'extrémité de l'une des branches du levier 54 s'étend au droit de l'axe Y-Y' du tiroir 40, tandis que l'extrémité de son autre branche vient au droit de l'axe X-X', suivant lequel le palpeur 15 s'étend.

Grâce à cette disposition, l'une des branches du levier pivotant 54 peut venir en contact et coopérer avec le tiroir 40, et l'autre avec le palpeur 15. Puisque le palpeur 15 est raccordé à la tige 12 du vérin 1, quand le piston 10 coulisse dans un sens donné suivant X-X', le palpeur 15 peut faire basculer le levier 54 de sorte que le tiroir 40 est déplacé suivant Y-Y', dans un sens opposé à celui du piston.

Suivant l'exemple illustré, le palpeur 15 a la forme d'un doigt monté à coulissement suivant X-X' à l'intérieur de la tige 12. Ce doigt traverse le piston 10, ainsi que la chambre 130 du vérin 1, et comporte à son extrémité opposée au levier 54, un épaulement en saillie ou embout 151. Cet épaulement 151 est logé avec jeu dans un évidement cylindrique de la tige 12 et se déplace suivant X-X' lorsque le doigt 15 coulisse. Il ressort des figures que l'embout 151 constitue une butée apte à venir en contact avec le piston 10, pour empêcher le palpeur 15 de se séparer de la tige 12 lorsque celui-ci se déplace vers le levier 54.

D'autre part, un ressort 125 est interposé entre le fond de l'évidement de la tige 12 et l'embout 151, afin de solliciter élastiquement le palpeur 15 à l'encontre du levier pivotant 54. Un tel ressort 125 permet d'amortir les débattements du piston 10 et de la tige 12 dont l'amplitude est supérieure à celle du pivotement possible du levier 54, tout en maintenant le contact entre ce dernier et le palpeur.

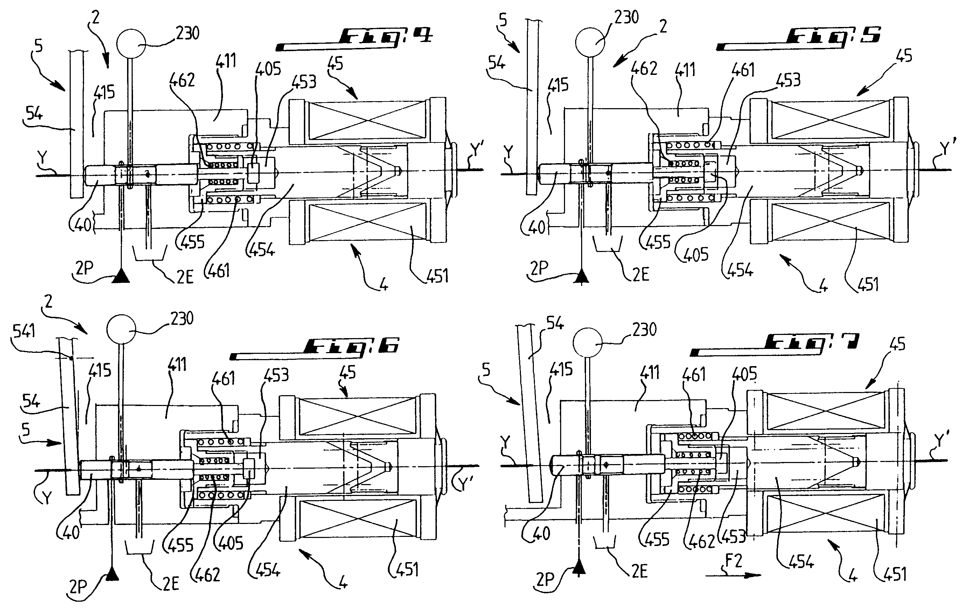

En effet, on remarque sur les figures 2 et 3 que le levier 54 de la liaison 5 coopère avec une ou plusieurs butées, aptes à en limiter le pivotement suivant le sens de rotation correspondant. Ainsi, une butée 515 constituée par un patin hémisphérique est vissée dans l'évidement 415 en regard du palpeur 15 et donc au droit de l'axe X-X'. De fait, le levier 54 peut venir en appui contre la butée 515 lorsque le palpeur 15 est déplacé vers l'organe d'ancrage 122 sur une longueur suffisante, c'est-à-dire quand ce levier 54 pivote suivant le sens trigonométrique.

D'autre part, un bouchon 540 vissé dans l'évidement 415 en regard du tiroir 40, peut constituer une seconde butée apte à limiter le pivotement du levier 54 dans le sens horaire sur les figures, comme par exemple sous l'effet d'un coulissement suffisant du tiroir 40 suivant Y-Y', dans un sens indiqué par la flèche F1 sur la figure 3.

Sur les figures, la référence numérique 45 désigne de manière générale des moyens de désactivation du dispositif de sécurité. Les moyens 45 sont aptes à interrompre la liaison mécanique 5 entre le deuxième distributeur 4 et la tige 12, lorsque le distributeur principal 3 fonctionne normalement. Ces moyens de désactivation ou interruption sont donc actionnés en alternance exclusivement avec les moyens de dérivation expliqués plus haut.

Ici, les moyens 45 sont notamment constitués par un électro-aimant dont le noyau mobile 454 est monté à coulissement suivant l'axe Y-Y' dans un corps fixe 451 avec une bobine d'excitation, ainsi que par un embout 405 du tiroir 40, grâce auquel ce dernier peut être rendu solidaire du noyau 454.

On comprend déjà au vu de la figure 7 que, quand l'électro-aimant des moyens 45 est excité, son noyau 454 s'éloigne de l'évidement 415 sous l'effet du champ magnétique produit par le bobinage du corps 451 (comme indiqué par la flèche F2), et fait coulisser le tiroir 40 jusqu'à ce que son extrémité libre opposée à l'embout 405 soit séparée du levier 54. Alors, tant que le bobinage du corps 451 est alimenté en courant électrique, la liaison 5 est interrompue et les débattements de la tige 12 ne sont plus transmis au distributeur 4, qui est donc désactivé.

Suivant le mode de réalisation illustré, le corps 451 de l'électro-aimant est directement fixé par vissage dans un logement fileté du boîtier 411, opposé à l'évidement 415. Une partie du tiroir 40 à l'extrémité de laquelle l'embout 405 est formé, fait saillie dans cet évidement du boîtier 411, ainsi qu'à l'intérieur d'un perçage taraudé 453 du noyau mobile 454. Cette partie du tiroir 40 est guidée suivant Y-Y' dans une douille 455, fixée par vissage dans le perçage taraudé 453 du noyau. On notera ici que c'est cette douille 455 solidaire du noyau 454 qui vient en butée suivant F2 contre l'embout 405 du tiroir 40, afin de séparer ce dernier du levier 54, lorsque les moyens 45 sont actionnés.

Par ailleurs, l'électro-aimant des moyens de désactivation 45 est pourvu de moyens 461 de rappel du noyau 454, aptes à solliciter ce dernier vers le levier 54, c'est-à-dire à le renvoyer suivant F1 quand les moyens 45 sont au repos. Ces moyens de rappel 461 sont essentiellement constitués par un ressort hélicoïdal interposé entre le corps 451 de l'électro-aimant, et un épaulement de la douille 455 en saillie de la périphérie du noyau 454.

En outre, pour que l'extrémité du tiroir 40 en saillie dans l'évidement 415 suive les pivotements du levier 54 lorsque les moyens de désactivation sont au repos, le noyau mobile 454 est pourvu de moyens 462 de rappel du tiroir 40 dans une position où il est contact avec la branche correspondante de ce levier. Ces moyens de rappel 462 sont ici constitués par un ressort hélicoïdal interposé entre la douille 455 et une pièce solidaire du tiroir 40, afin de solliciter élastiquement ce dernier vers le levier 54, et plus précisément suivant le sens de la flèche F1 sur la figure 3.

Evidemment, on remarque sur les figures qu'un espace suffisant est ménagé entre le fond de la douille 455 contre laquelle l'embout 405 vient en butée, et le fond du perçage 453 du noyau 454, pour que le tiroir 40, et donc l'embout 405 qui en est solidaire, puissent librement coulisser sous l'effet du levier 54.

Avant de décrire le fonctionnement du dispositif de sécurité conforme à l'invention, on remarquera sur les figures 2 à 7 que le tiroir 40 du deuxième distributeur 4, qui est sensiblement de forme cylindrique, présente deux tronçons intermédiaires à section réduite ou évidements périphériques. Ces évidements périphériques séparent trois pavés cylindriques d'obturation et de guidage, dont le diamètre correspond à celui du logement du boîtier 411 où le tiroir 40 est monté à coulissement. Pour permettre au fluide hydraulique de circuler entre deux conduits du circuit 2 formés dans le boîtier 411, l'un de ces évidements périphériques du tiroir 40 doit venir en regard de ces deux conduits, et établir ainsi leur connexion.

Tout d'abord, lorsque le distributeur principal 3 n'est pas défaillant, le dispositif de sécurité est placé dans sa position désactivée représentée sur la figure 7, comme expliqué précédemment.

Par contre, en cas de dysfonctionnement des moyens de commande 31 ou 32, le distributeur 3 est placé en position fermée (figure 1) par les moyens de dérivation, et l'asservissement du vérin 1 est alors commandé par le deuxième distributeur 4, comme expliqué ci-après.

Si le piston 10 du vérin 1 est dans sa position intermédiaire prédéterminée, par exemple dans le cas où il n'est pas sollicité, le levier 54 est dans une position neutre ou de maintien, dans laquelle il n'est en contact ni avec la butée 515 ni avec la butée 540, si celle-ci est prévue. Dans cette position neutre illustrée sur la figure 4, le levier 54 s'étend à peu près perpendiculairement aux axes X-X' et Y-Y' et coopère avec le tiroir 40 du deuxième distributeur 4 pour que les conduits du circuit 2 connectés à l'échappement 2E et à la source 2P viennent chacun en regard de l'un des évidements périphériques du tiroir. Ces évidements sont euxmêmes isolés l'un de l'autre par un pavé disposé en regard et obturant le conduit formé dans le boîtier 411 qui est connecté au raccord 230, et donc à la chambre 130 du vérin 1. De fait, lorsque le tiroir 40 est en position de maintien, l'alimentation en fluide sous pression de la chambre de grande section du vérin 1 est interrompue, de sorte que le piston 10 reste en position intermédiaire.

La figure 6 représente une position ou un état d'asservissement par alimentation du dispositif conforme à l'invention. Dans cette position, la chambre de grande section 130 du vérin est reliée par le deuxième distributeur 4 à la source 2P de fluide hydraulique sous haute pression. Or, puisque la chambre 120 est reliée à cette même source 2P par le conduit 220, mais que l'aire de sa section transversale (perpendiculairement à l'axe X-X') est inférieure à celle de la chambre 130, l'effort de sollicitation appliqué au piston 10 par cette pression est plus grand dans la chambre 130 que dans la chambre 120. On comprend que dans cet état, le piston, et donc la tige 12, sont déplacés de façon à s'éloigner de l'organe d'ancrage 122, ce qui a pour effet d'augmenter la longueur du vérin 1. Le deuxième distributeur 4 est placé dans un tel état quand le piston 10 est éloigné de sa position intermédiaire dans un sens tendant à réduire la longueur du vérin 1. En effet, dans ce cas le palpeur 15 est déplacé par la tige 12 jusqu'à ce que le levier 54 vienne en appui contre la butée 515 et que le tiroir 40 obture le conduit relié à l'échappement 2E et raccorde, par l'intermédiaire de l'un de ses évidements périphériques, la chambre 130 et la source 2P. Alors, l'asservissement par alimentation de la chambre 130 provoque un déplacement en sens inverse ou opposé du piston 10, jusqu'à ce qu'il se trouve à nouveau dans sa position intermédiaire, comme illustré sur la figure 4.

A l'inverse, si le piston 10 est éloigné de sa position intermédiaire dans un sens provoquant l'allongement du vérin 1, la tige 12 et donc le palpeur 15 coulissent en s'éloignant de l'organe d'ancrage 122. Un tel coulissement provoque un pivotement correspondant du levier 54, jusqu'à ce que sa branche opposée au palpeur 15 vienne en appui contre la butée 540. Sous l'effet du ressort 462, le tiroir 40 suit le levier 54 et se déplace vers la butée 540, de façon à placer le distributeur 4 dans un état d'asservissement par échappement, tel qu'illustré sur la figure 5. Dans cet état, le tiroir 40 est dans une position telle que les conduits du circuit 2 qui relient respectivement l'échappement 2E et la chambre 130 au distributeur 4 sont raccordés l'un à l'autre par l'intermédiaire de l'un des évidements périphériques du tiroir 40. D'autre part, le conduit relié à la source 2P est obturé par un pavé de ce tiroir. On comprend qu'alors le fluide contenu dans la chambre 130 peut s'en échapper, jusqu'à ce que le piston retrouve sa position intermédiaire prédéterminée.

Par conséquent, en choisissant de façon appropriée la position intermédiaire du piston 10, et principalement en fonction de l'utilisation qui doit être faite du vérin 1, celui-ci reprend une longueur acceptable correspondante, et continue à réagir dynamiquement aux sollicitations qui lui sont appliquées, même si la commande du distributeur principal est défaillante.

Ainsi, comme par exemple pour la suspension active expliquée plus haut, le véhicule équipé du dispositif de sécurité conforme à l'invention restera parfaitement stable et conduisible, même en cas de dysfonctionnement de la commande principale d'asservissement d'un vérin de stabilisation.

## Revendications

1. Dispositif de sécurité pour un vérin asservi du type commandé par un distributeur principal (3) lui-même monté sur un circuit hydraulique (2) et piloté par des moyens de commande (31, 32), comprenant des moyens de dérivation aptes à couper, en cas de défaillance ou dysfonctionnement des moyens de commande (31, 32), l'alimentation en fluide hydraulique par le distributeur principal (3), et des moyens pour, dans ledit cas, renvoyer le piston du vérin à une position intermédiaire prédéterminée, caractérisé en ce que les moyens pour renvoyer le piston du vérin à une position intermédiaire prédéterminée comprennent un deuxième distributeur (4) monté en parallèle avec le distributeur principal dans le circuit hydraulique, et dont le tiroir (40) est raccordé à la tige (12) du piston (10) du vérin par une liaison mécanique (5) interrompue lors du fonctionnement normal des moyens de commande, de sorte que, en ledit cas de défaillance ou dysfonctionnement, un déplacement de la tige éloignant le piston d'une position intermédiaire prédéterminée, provoque le déplacement du tiroir (40) dans une position correspondant à un état du deuxième distributeur (4) tel que le piston (10) est alors déplacé en sens opposé, vers ladite position intermédiaire par la pression du fluide hydraulique.

2. Dispositif selon la revendication 1, caractérisé en ce qu'il comporte des moyens de désactivation (45) aptes à interrompre la liaison mécanique (5) précitée, lors du fonctionnement normal des moyens de commande (31, 32) du distributeur principal (3).

3. Dispositif selon la revendication 1 ou 2, caractérisé en ce que la liaison mécanique (5) précitée est constituée par un levier pivotant (54) dont une branche peut être mise en contact avec un palpeur (15) raccordé à la tige (12) du vérin (1), et l'autre avec le tiroir du deuxième distributeur (4).

4. Dispositif selon la revendication 3, caractérisé en ce que la liaison mécanique (5) comporte au moins une butée (515, 540) apte à limiter un mouvement de pivotement correspondant du levier (54) précité.

5. Dispositif selon la revendication 3 ou 4, caractérisé en ce que le palpeur (15) est monté à coulissement sur la tige (12) du vérin, et est sollicité élastiquement vers le levier pivotant (54), par exemple à l'aide d'un ressort (125) interposé entre ledit palpeur et la tige du vérin (1).

6. Dispositif selon l'une des revendications 3 à 5, caractérisé en ce qu'une partie du tiroir (40) précité coulisse à l'intérieur du noyau (454) d'un électro-aimant, et comprend un embout (405) apte à rendre le tiroir (40) solidaire du noyau (454) de l'électro-aimant, lorsque ce dernier est excité, cet embout et l'électro-aimant constituant les moyens de désactivation de la liaison mécanique (5) précitée.

7. Dispositif selon la revendication 6, caractérisé en ce que l'électro-aimant précité comporte des moyens de rappel (461) du noyau (454), aptes à solliciter ce dernier vers le levier pivotant (54).

8. Dispositif selon la revendication 6 ou 7, caractérisé en ce que le noyau (454) comprend des moyens de rappel (462) du tiroir dans une position où il est en contact avec la branche correspondante du levier (54).

9. Dispositif selon l'une des revendications 3 à 8, caractérisé en ce que le tiroir (40) du deuxième distributeur (4) est agencé de manière qu'en position intermédiaire du piston (10), et donc du levier pivotant (54), le raccordement par le deuxième distributeur (4) d'une source d'alimentation en fluide (2P) de la chambre à grande section (130) du vérin est interrompu, tandis que ladite chambre (130) est reliée à ladite source de fluide (2P) lorsque le piston (10) est déplacé suivant un sens donné, et à l'échappement (2E) du circuit hydraulique (2) lorsque le piston est déplacé suivant le sens opposé.

## Claims

1. Safety device for an automatically follow-up controlled jack of the type operated by a main distributor (3) itself mounted on a hydraulic circuit (2) and driven by control means (31, 32), comprising by-pass means adapted to cut off, in case of failure or malfunction of the control means (31, 32), the feeding of hydraulic fluid by the main distributor (3) and means for returning in the said case the piston of the jack to a predetermined intermediate position, characterized in that the means for returning the piston of the jack to a predetermined intermediate position comprise a second distributor (4) mounted in parallel relationship with the main distributor in the hydraulic circuit and the spool (40) of which is connected to the rod (12) of the piston (10) of the jack by a mechanical connection (5) interrupted during the normal operation of the control means, so that in the said case of failure or malfunction, a displacement of the rod moving the piston away from a predetermined intermediate position causes the displacement of the spool (40) into a position corresponding to such a state of the second distributor (4) that the piston (10) is then displaced in the opposite direction towards the said intermediate position by the pressure of the hydraulic fluid.

2. Device according to claim 1, characterized in that it comprises de-energizing means (45) adapted to interrupt the aforesaid mechanical connection (5) during the normal operation of the control means (31, 32) of the main distributor (3).

3. Device according to claim 1 or 2, characterized in that the aforesaid mechanical connection (5) is constituted by a pivoting lever (54) one arm of which may be put in contact with a feeler (15) connected to the rod (12) of the jack (1) and the other one with the spool of the second distributor (4).

4. Device according to claim 3, characterized in that the mechanical connection (5) comprises at least one stop (515, 540) adapted to limit a corresponding pivoting motion of the aforesaid lever (54).

5. Device according to claim 3 or 4, characterized in that the feeler (15) is slidably mounted onto the rod (12) of the jack and is elastically urged towards the pivoting lever (54) for example with the assistance of a spring (125) interposed between the said feeler and the rod of the jack (1).

6. Device according to one of claims 3 to 5, characterized in that one portion of the aforesaid spool (40) is sliding inside of the core (454) of an electromagnet and comprises an end part (405) adapted to make the spool (40) fast to the core (454) of the electromagnet when the latter is energized, this end part and the electromagnet constituting the de-energizing means of the aforesaid mechanical connection (5).

7. Device according to claim 6, characterized in that the aforesaid electromagnet comprises drawback means (461) for the core (454) adapted to urge the latter towards the pivoting lever (54).

8. Device according to claim 6 or 7, characterized in that the core (454) comprises means (462) for returning the spool to a position where it is in contact with the corresponding arm of the lever (54).

9. Device according to one of claims 3 to 8, characterized in that the spool (40) of the second distributor (4) is arranged so that in the intermediate position of the piston (10) hence of the pivoting lever (54), the connection by the second distributor (4) of a source (2P) feeding with fluid the chamber with a large section (130) of the jack is interrupted whereas said chamber (130) is connected to the said fluid source (2P) when the piston (10) is displaced in a given direction and to the exhaust (2E) of the hydraulic circuit (2) when the piston is displaced in the opposite direction.

## Patentansprüche

1. Sicherheitsvorrichtung für einen Kraftzylinder mit Nachlaufsteuerung, der durch einen Hauptverteiler (3) betätigten Gattung, der selber in einem hydraulischen Kreislauf (2) angeordnet ist und durch Steuermittel (31, 32) gesteuert wird, mit Ableitungsmitteln, die geeignet sind, im Falle eines Ausfalles oder Fehlbetriebes der Steuermittel (31, 32), die Speisung mit Hydraulikflüssigkeit durch den Hauptverteiler (3) zu unterbrechen und Mitteln, um in dem besagten Fall den Kolben des Kraftzylinders in eine vorbestimmte Zwischenstellung zurückzuführen, dadurch gekennzeichnet, dass die Mittel zur Rückführung des Kolbens des Kraftzylinders in eine vorbestimmte Zwischenstellung einen zweiten mit dem Hauptverteiler in dem hydraulischen Kreislauf parallel geschalteten Verteiler (4) aufweisen, dessen Schieber (40) mit der Stange (12) des Kolbens (10) des Kraftzylinders durch eine während des normalen Betriebes der Steuermittel unterbrochene mechanische Verbindung (5) verbunden ist, so dass in dem besagten Fall des Ausfalles bzw. Fehlbetriebes, eine den Kolben von der vorbestimmten Zwischenstellung wegbewegende Verschiebung der Stange die Verschiebung des Schiebers (40) in eine Stellung verursacht, die einem solchen Zustand des zweiten Verteilers (4) entspricht, dass der Kolben (10) dann in die entgegengesetzte Richtung zu der besagten Zwischenstellung durch den Druck der hydraulischen Flüssigkeit verschoben wird.

2. Vorrichtung nach Anspruch 1, dadurch gekennzeichnet, dass sie unwirksammachende Mittel (45) aufweist, die geeignet sind, die vorgenannte mechanische Verbindung (5) während des normalen Betriebes der Steuermittel (31, 32) des Hauptverteilers (3) zu unterbrechen.

3. Vorrichtung nach Anspruch 1 oder 2, dadurch gekennzeichnet, dass die vorgenannte mechanische Verbindung (5) durch einen Schwenkhebel (54) gebildet wird, dessen eine Arm mit einem mit der Stange (12) des Kraftzylinders (1) verbundenen Fühler (15) und der andere mit dem Schieber des zweiten Verteilers (4) in Berührung gebracht werden kann.

4. Vorrichtung nach Anspruch 3, dadurch gekennzeichnet, dass die mechanische Verbindung (5) wenigstens einen Anschlag (515, 540) aufweist, der geeignet ist, eine entsprechende Schwenkbewegung des vorgenannten Hebels (54) zu begrenzen.

5. Vorrichtung nach Anspruch 3 oder 4, dadurch gekennzeichnet, dass der Fühler (15) an der Stange (12) des Kraftzylinders gleitbar angeordnet ist und zum Schwenkhebel (54) hin z.B. mit Hilfe einer zwischen dem besagten Fühler und der Stange des Kraftzylinders (1) gefügten Feder (125) elastisch beaufschlagt wird.

6. Vorrichtung nach einem der Ansprüche 3 bis 5, dadurch gekennzeichnet, dass ein Teil des vorgenannten Schiebers (40) innerhalb des Kernes (454) eines Elektromagnets gleitet und ein Endstück (405) aufweist, das geeignet ist, den Schieber (40) mit dem Kern (454) des Elektromagnets, wenn der letztere erregt wird, fest zu verbinden, wobei dieses Endstück und der Elektromagnet die Mittel zum Unwirksammachen der vorgenannten mechanischen Verbindung (5) bilden.

7. Vorrichtung nach Anspruch 6, dadurch gekennzeichnet, dass der vorgenannte Elektromagnet Mittel (461) zur Rückstellung des Kernes (454) aufweist, die geeignet sind, den letzteren zu dem Schwenkhebel (54) hin zu beaufschlagen.

8. Vorrichtung nach Anspruch 6 oder 7, dadurch gekennzeichnet, dass der Kern (454) Mittel (462) zur Rückstellung des Schiebers in eine Stellung, wo er mit dem entsprechenden Arm des Hebels (54) in Berührung ist, aufweist.

9. Vorrichtung nach einem der Ansprüche 3 bis 8, dadurch gekennzeichnet, dass der Schieber (40) des zweiten Verteilers (4) derart angeordnet ist, dass in der Zwischenstellung des Kolbens (10) und also des Schwenkhebels (54), die Verbindung durch den zweiten Verteiler (4) einer Quelle (2P) zur Fließmittelspeisung der Kammer grossen Querschnitts (130) des Kraftzylinders unterbrochen wird, während die besagte Kammer (130) mit der besagten Fließmittelquelle (2P), wenn der Kolben (10) in einer gegebenen Richtung verschoben wird und mit dem Auslass (2E) des hydraulischen Kreislaufes (2), wenn der Kolben in der entgegengesetzten Richtung verschoben wird, verbunden ist.
